# DEMANDE DE BREVET EUROPEEN

(11) **EP 0 722 708 A1**
(43) Date de publication de la demande: **24.07.1996**
(21) Numéro de dépôt: 96400076.4
(22) Date de dépôt: 12.01.1996
(51) Int. Cl.: A61J 9/00, A47J 36/26

(54) **Biberon chauffant par induction**

(30) Priorité: 18.01.1995 FR 9500524
(71) Demandeur: SEB S.A., F-69130 Ecully (FR)
(72) Inventeur: Chapel, Vincent, F-74000 Annecy (FR); Miquelot, Gilles, F-74150 Rumilly (FR)
(74) Mandataire: Keib, Gérard

(57) **Abrégé**

Le biberon comprend un corps creux (1) sensiblement cylindrique, en matière transparente.

Le fond (2) dudit corps creux (1) comporte une plaque (3) en métal ayant des propriétés ferromagnétiques, comprises entre deux parois, l'une intérieure (4) et l'autre extérieure (5), qui sont reliées de façon étanche l'une à l'autre.

## Description

La présente invention concerne un biberon constitué par un corps creux sensiblement cylindrique, en matière transparente.

Actuellement, les biberons en verre ou en matière plastique transparente sont chauffés au moyen d'un chauffe-biberon.

L'inconvénient des chauffe-biberons est que la montée en température du liquide contenu dans le biberon est relativement long. De plus il est difficile d'obtenir la température idéale du liquide, qui est égale à 37°C, du fait de l'imprécision de la régulation thermique de ces chauffe-biberons.

Le but de la présente invention est de remédier aux inconvénients des chauffe-biberons connus, en créant un moyen de chauffage des biberons assurant une montée de la température plus rapide et un contrôle plus précis de cette température.

Suivant l'invention, le biberon comprenant un corps creux sensiblement cylindrique, en matière transparente est caractérisé en ce que le fond dudit corps creux comporte une plaque en métal ayant des propriétés ferromagnétiques comprises entre deux parois l'une intérieure et l'autre extérieure qui sont reliées de façon étanche l'une à l'autre.

Le fond du biberon intègre ainsi une plaque ferromagnétique parfaitement isolée de l'intérieur et de l'extérieur du biberon qui permet de chauffer ce dernier par induction, en posant le fond du biberon sur une plaque de chauffage par induction.

Ce mode de chauffage permet à la fois une montée rapide en température du lait et un contrôle précis de la température de ce dernier.

Le corps creux du biberon est de préférence en matière plastique telle que le polycarbonate.

De préférence la plaque en métal ferromagnétique s'étend sur toute la surface du fond et remonte légèrement sur la paroi latérale du corps creux.

La plaque ferromagnétique présente ainsi la forme d'une coupelle.

Outre, l'avantage évoqué ci-dessus cette plaque améliore la résistance mécanique du fond du biberon, en rendant celui-ci très résistant à l'égard des chocs mécaniques auxquels il est exposé.

Selon une réalisation avantageuse de l'invention, la paroi intérieure fait partie intégrante du corps creux et la paroi extérieure est reliée de façon étanche à la paroi intérieure suivant une ligne annulaire située à une certaine hauteur au-dessus du fond du corps creux.

D'autre particularités et avantages de l'invention apparaîtront encore dans la description ci-après.

Aux dessins annexés, donnés à titre d'exemples non limitatifs :
- la figure 1 est une vue en coupe d'un biberon conforme à l'invention et d'une plaque de chauffage par induction pour chauffer ledit biberon,
- la figure 2 est une vue en coupe à plus grande échelle du détail A de la figure 1.

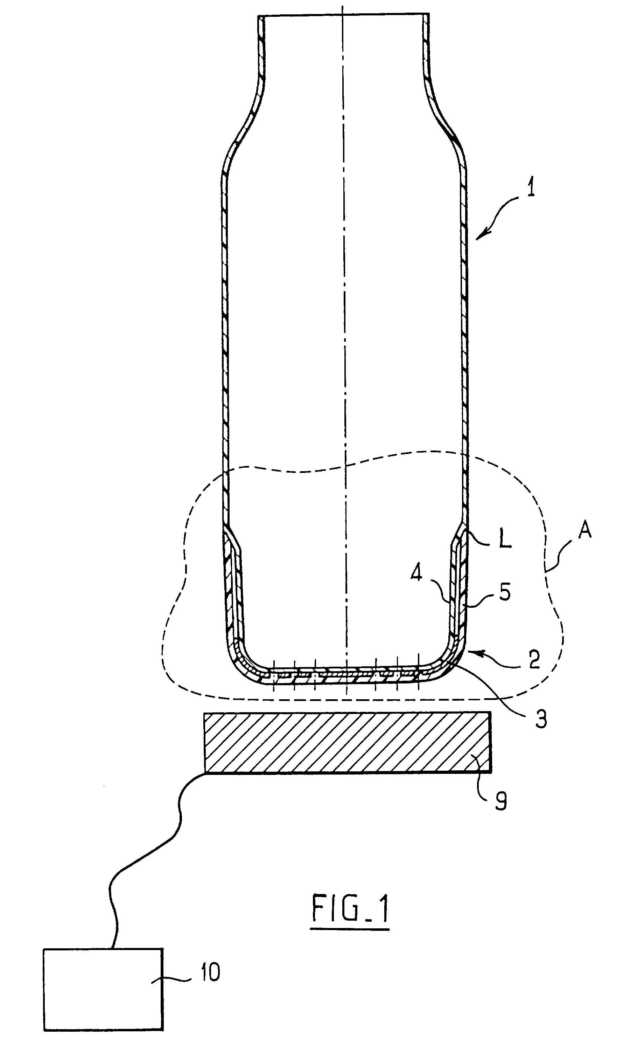

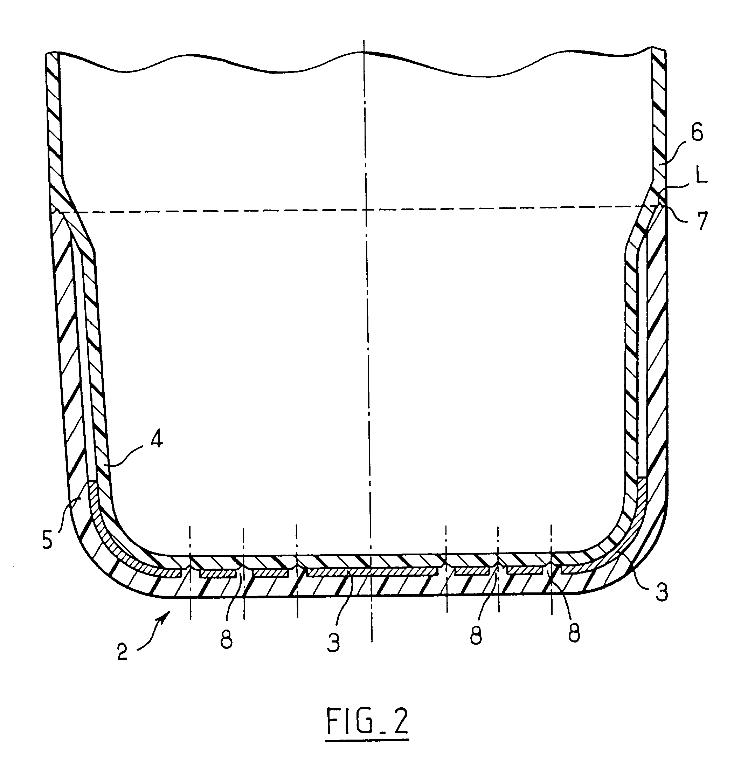

Dans l'exemple représenté sur les figures 1 et 2, le biberon comprend un corps creux 1 sensiblement cylindrique en matière transparente.

Conformément à l'invention le fond 2 dudit corps creux comporte une plaque 3 en matière ayant des propriétés ferromagnétique telle que l'acier inoxydable ferritique, comprise entre deux parois 4, 5, l'une intérieure et l'autre extérieure qui sont reliées de façon étanche l'une à l'autre.

Le corps creux est de préférence en matière plastique, telle que le polycarbonate.

Dans l'exemple représenté, la plaque 3 en métal ferromagnétique s'étend sur toute la surface du fond 2 et remonte légèrement sur la paroi latérale du corps creux 1.

Par ailleurs la paroi intérieure 4 fait partie intégrante du corps creux 1 et la paroi extérieure 5 est reliée de façon étanche à la paroi intérieure 4 suivant une ligne annulaire L située à une certaine hauteur au-dessus du fond 2 du corps creux 1.

En outre, les deux parois 4, 5 sont reliées de façon étanche par soudage suivant la ligne précitée.

Lorsque le biberon est en polycarbonate, le soudage peut être réalisé par ultra-sons.

On voit notamment sur la figure 2, que ladite paroi intérieure 4 présente un diamètre rétréci par rapport à la paroi latérale proprement dite 6 du corps creux 1. Par ailleurs, la paroi extérieure 5 est située dans le prolongement de la paroi latérale proprement dite 6 du corps creux 1. Les deux parois 4 et 5 sont reliées ensemble par soudage aux ultra-sons suivant un épaulement annulaire 7 ménagé dans la zone de raccordement entre ladite paroi intérieure 4 et la paroi latérale 6 du corps creux 1.

Les deux parois 4 et 5 sont en outre reliées l'une à l'autre dans la zone du fond par une série de picots 8 qui traversent la plaque ferromagnétique 3.

Ces picots 8 font partie de l'une des parois 4, 5 et leurs extrémités sont soudées à l'autre paroi, également par ultra-sons.

Dans l'exemple représenté, les picots 8 font partie de la plaque extérieure 5 qui est légèrement plus épaisse que la plaque intérieure 4.

Dans une réalisation avantageuse de l'invention la plaque 3 est un alliage ferromagnétique dont le point de curie est situé à une température de l'ordre de 40° C.

Pour chauffer le biberon que l'on vient de décrire on pose son fond sur la plaque d'induction 9 reliée au générateur 10 représenté sur la figure 1.

Grâce à la présence de la plaque ferromagnétique 3 dans le fond du biberon, cette dernière est chauffée par induction et transmet les calories au lait à travers la paroi intérieure 4.

Le lait est chauffé rapidement jusqu'à une température maximale dont on peut contrôler avec précision la valeur, notamment grâce à la faible inertie thermique de la plaque 3.

Lorsque la plaque 3 est en alliage ferromagnétique dont le point de Curie (température à laquelle l'alliage perd ses propriétés ferromagnétiques) est situé à une température de l'ordre de 40 C, le chauffage de la plaque 3 s'arrête automatiquement et le lait est porté à la température idéale comprise entre 37°C et 40°C.

Dans le mode de réalisation décrit, la plaque 3 ferromagnétique est parfaitement isolée par rapport à l'extérieur et à l'intérieur du biberon, du fait de la parfaite étanchéité réalisée entre les deux parois 4 et 5.

De plus, le mode d'assemblage des deux parois 4 et 5 réalisé au moyen des picots 8 soudés permet de plaquer parfaitement la plaque 3 contre la paroi intérieure 4 et contre la paroi extérieure 5, ce qui assure d'excellentes conditions d'échange thermique entre la plaque 3 et l'intérieur du biberon.

Par ailleurs, la plaque 3 joue le rôle d'armature qui renforce la résistance mécanique de fond du biberon, en rendant celui-ci pratiquement incassable.

La matière ayant des propriétés ferromagnétiques peut également être constituée par de l'émail chargé de poudre ferromagnétique. Cette matière peut être appliquée sur la paroi 4 ou 5 du biberon, par sérigraphie ou pistolage.

## Revendications

1. Biberon comprenant un corps creux (1) sensiblement cylindrique, en matière transparente, caractérisé en ce que le fond (2) dudit corps creux (1) comporte une plaque (3) en matière ayant des propriétés ferromagnétiques, comprise entre deux parois, l'une intérieure (4) et l'autre extérieure (5), qui sont reliées de façon étanche l'une à l'autre.

2. Biberon conforme à la revendication 1, caractérisé en ce que le corps creux (1) est en matière plastique.

3. Biberon conforme à la revendication 2, caractérisé en ce que la matière plastique est du polycarbonate.

4. Biberon conforme à l'une des revendications 1 à 3, caractérisé en ce que la plaque (3) en matière ferromagnétique s'étend sur toute la surface du fond (2) et remonte légèrement sur la paroi latérale du corps creux.

5. Biberon conforme à l'une des revendications 1 à 4, caractérisé en ce que la paroi intérieure (4) fait partie intégrante du corps creux et la paroi extérieure (5) est reliée de façon étanche à la paroi intérieure (4) suivant une ligne annulaire (L) située à une certaine hauteur au-dessus du fond (2) du corps creux.

6. Biberon conforme à l'une des revendications 1 à 5 caractérisé en ce que les deux parois (4, 5) sont reliées de façon étanche par soudage.

7. Biberon conforme à la revendication 5, caractérisé en ce que ladite paroi intérieure (4) présente un diamètre rétréci par rapport à la paroi latérale proprement dite (6) du corps creux, tandis que ladite paroi extérieure (5) est située dans le prolongement de la paroi latérale proprement dite (6) du corps creux, les deux parois (4, 5) étant reliées ensemble par soudage suivant un épaulement annulaire (7) ménagé dans la zone de raccordement entre ladite paroi intérieure (4) et la paroi latérale (6) du corps creux.

8. Biberon conforme à l'une des revendications 1 à 7, caractérisé en ce que les deux parois (4, 5) sont en outre reliées l'une à l'autre par une série de picots (8) qui traversent la plaque ferromagnétique (3), ces picots (8) faisant partie de l'une des parois (4, 5) et leurs extrémités étant soudées à l'autre paroi.

9. Biberon conforme à l'une des revendications 1 à 8, caractérisé en ce que les picots (8) font partie de la paroi extérieure (5).

10. Biberon conforme à l'une des revendications 1 à 9, caractérisé en ce que la plaque (3) est un alliage ferromagnétique dont le point de Curie est situé à une température de l'ordre de 40°C.

11. Biberon conforme à l'une des revendications 1 à 9, caractérisé en ce que la matière ayant des propriétés ferromagnétiques est à base d'émail chargé de poudre ferromagnétique.
